# EUROPEAN PATENT APPLICATION

(11) **EP 4 234 279 A1**
(43) Date of publication of application: **30.08.2023**
(21) Application number: 23158290.9
(22) Date of filing: 23.02.2023
(51) Int. Cl.: B60C 23/04

(54) **ENERGY CONVERSATION IN VEHICLE SENSOR SYSTEMS**

(30) Priority: 25.02.2022 US 202217680639
(71) Applicant: Bendix Commercial Vehicle Systems, LLC, Avon, OH 44011 (US)
(72) Inventor: LAMMERS, Shawn D., Delta, V4C2P7 (CA)
(74) Representative: Kleine, Hubertus

(57) **Abstract**

A system for assessing operating conditions for a vehicle includes, a power source and first and second sensors coupled to the power source and configured to generate corresponding first and second sensor signals indicative of first and second operating conditions of the vehicle. The second operating condition is indicative of an operating state of the vehicle. A transmitter is coupled to the power source and configured to transmit an informational signal responsive to the first sensor signal. A controller is configured to receive the second sensor signal, determine, responsive to the second sensor signal, whether the operating state of the vehicle meets a predetermined condition and then provide control signals to one or both of the first sensor and the transmitter to control the sampling rate of the first sensor and/or the transmission rate of the transmitter depending on whether the operating state meets the predetermined condition.

## Description

### BACKGROUND OF THE INVENTION

### a. Field of the Invention

This invention relates to sensors used to assess vehicle operating conditions. In particular, the invention relates to a system that reduces the sampling rate of a sensor and/or the transmission rate of a transmitter transmitting information from the sensor when the vehicle is in predetermined operating states in order to conserve energy.

### b. Background Art

Sensors are used in conventional vehicles to assess a wide variety of operating conditions in the vehicle including tire pressure, wheel speed, engine temperature, vehicle acceleration, etc. These sensors are often formed as modular units that include their own power source (i.e., they do not draw power from the vehicle battery or other power sources on the vehicle external to the sensor unit) and transmit sensor data wirelessly to other on-board vehicle systems or systems that are remote from the vehicle such as fleet management systems. Because these sensor units are reliant on their own power source, it is important to limit use of power from the power source in order to conserve the life of the power source and reduce maintenance costs. Many sensor units, however, sample one or more vehicle operating conditions continuously and/or transmit the sampled information continuously even though information regarding the operating condition may only be needed when the vehicle is in certain operating states. As a result, the life of the power source-and the sensor unit as a whole-is reduced without providing a corresponding benefit.

The inventors herein have recognized a need for a system for assessing operating conditions for a vehicle that will minimize and/or eliminate one or more of the above-identified deficiencies.

### BRIEF SUMMARY OF THE INVENTION

This invention relates to sensors used to assess vehicle operating conditions. In particular, the invention relates to a system that reduces the sampling rate of a sensor and/or the transmission rate of a transmitter transmitting information from the sensor when the vehicle is in predetermined operating states in order to conserve energy.

A system for assessing operating conditions for a vehicle in accordance with one embodiment includes a power source, a first sensor coupled to the power source and configured to generate a first sensor signal indicative of a first operating condition of the vehicle and a second sensor coupled to the power source and configured to generate a second sensor signal indicative of a second operating condition of the vehicle. The second operating condition is indicative of an operating state of the vehicle. The system further includes a transmitter coupled to the power source and configured to transmit an informational signal responsive to the first sensor signal. The system further includes a controller configured to receive the second sensor signal and to determine, responsive to the second sensor signal, whether the operating state of the vehicle meets a predetermined condition. The controller is further configured to provide a first control signal to the first sensor to cause the first sensor to sample the first operating condition at a first sampling rate if the operating state of the vehicle meets the predetermined condition and to provide a second control signal to the first sensor to cause the first sensor to sample the first operating condition at a second sampling rate, different from the first sampling rate, if the operating state of the vehicle does not meet the predetermined condition.

A system for assessing operating conditions for a vehicle in accordance with another embodiment includes a power source, a first sensor coupled to the power source and configured to generate a first sensor signal indicative of a first operating condition of the vehicle and a second sensor coupled to the power source and configured to generate a second sensor signal indicative of a second operating condition of the vehicle. The second operating condition is indicative of an operating state of the vehicle. The system further includes a transmitter coupled to the power source and configured to transmit an informational signal responsive to the first sensor signal. The system further includes a controller configured to receive the second sensor signal and to determine, responsive to the second sensor signal, whether the operating state of the vehicle meets a predetermined condition. The controller is further configured to provide a first control signal to the transmitter to cause the transmitter to transmit the informational signal at a first transmission rate if the operating state of the vehicle meets the predetermined condition and to provide a second control signal to the transmitter to cause the transmitter to transmit the informational signal at a second transmission rate, different from the first transmission rate, if the operating state of the vehicle does not meet the predetermined condition.

A system for assessing operating conditions for a vehicle in accordance with another embodiment includes a power source, a first sensor coupled to the power source and configured to generate a first sensor signal indicative of a first operating condition of the vehicle and a second sensor coupled to the power source and configured to generate a second sensor signal indicative of a second operating condition of the vehicle. The second operating condition is indicative of an operating state of the vehicle. The system further includes a transmitter coupled to the power source and configured to transmit an informational signal responsive to the first sensor signal. The system further includes a controller configured to receive the second sensor signal and to determine, responsive to the second sensor signal, whether the operating state of the vehicle meets a predetermined condition. The controller is further configured to provide a first control signal to the first sensor to cause the first sensor to sample the first operating condition at a first sampling rate if the operating state of the vehicle meets the predetermined condition and to provide a second control signal to the first sensor to cause the first sensor to sample the first operating condition at a second sampling rate, different from the first sampling rate, if the operating state of the vehicle does not meet the predetermined condition. The controller is further configured to provide a third control signal to the transmitter to cause the transmitter to transmit the informational signal at a first transmission rate if the operating state of the vehicle meets the predetermined condition and to provide a fourth control signal to the transmitter to cause the transmitter to transmit the informational signal at a second transmission rate, different from the first transmission rate, if the operating state of the vehicle does not meet the predetermined condition.

A system for assessing operating conditions in a vehicle in accordance with the present teachings represents an improvement as compared to conventional systems. In particular, the system uses a sensor signal generated by one sensor and indicative of an operating state of the vehicle to determine the sampling rate of another sensor and/or the transmission rate of a transmitter that transmits information from that sensor. In this manner, the sampling rate and/or transmission rate can be modified depending on the operating state of the vehicle so that the sensor and/or transmitter does not operate, or operates less frequently, when the operating state of the vehicle does not require the same amount of information regarding the operating condition sensed by the sensor. As a result, the life of the power source supplying power to the sensor and/or transmitter-as well as the sensor unit as a whole--is increased and maintenance costs are reduced.

The foregoing and other aspects, features, details, utilities, and advantages of the present invention will be apparent from reading the following description and claims, and from reviewing the accompanying drawings.

### BRIEF DESCRIPTION OF THE DRAWINGS

Figures 1-2 are diagrammatic views of a vehicle incorporating systems in accordance with the present teachings for assessing various operating conditions for the vehicle.
Figure 3 is a block diagram of one embodiment of a system in accordance with the present teachings for assessing operating conditions for a vehicle.

### DETAILED DESCRIPTION OF THE INVENTION

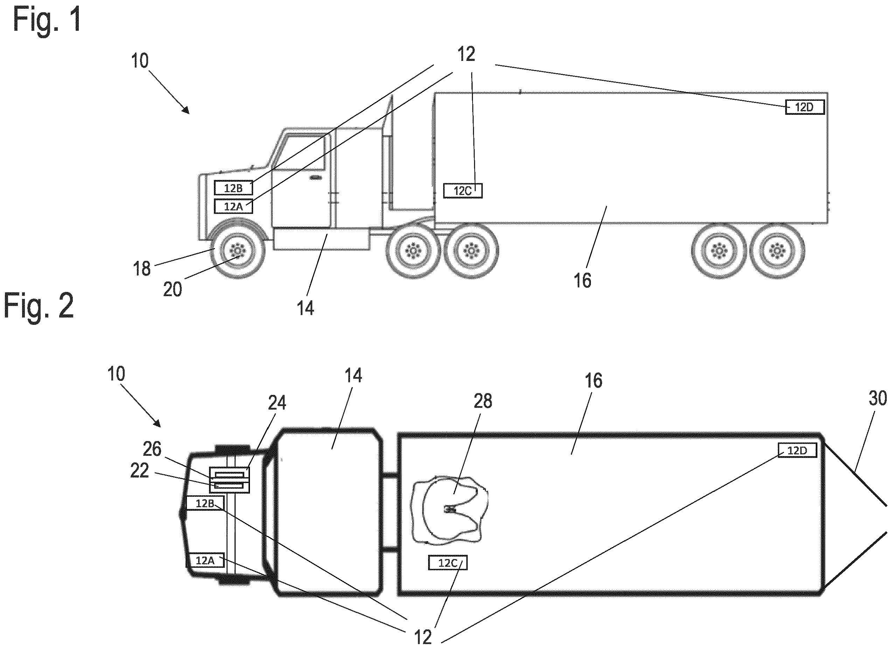

Referring now to the drawings wherein like reference numerals are used to identify identical components in the various views, Figures 1-2 illustrate a vehicle 10 incorporating one or more systems 12 for assessing various operating conditions for vehicle 10. In the illustrated embodiment, vehicle 10 comprises a tractor-trailer (also referred to as a semi). It should be understood, however, that systems 12 in accordance with the present teachings could be used in other types of vehicles including, for example, other commercial vehicles such as buses or off-road vehicles and in non-commercial vehicles such as automobiles. Vehicle 10 includes a tractor 14 or power unit and one or more trailers 16 or towed units. Tractor 14 is provided to move trailers 16 between locations. Tractor 14 contains a power unit, such as an internal combustion engine, and steering and drive axles. Tractor 14 also contains a battery for use in starting the power unit and in providing power to various accessory systems. Trailers 16 are provided to store freight and are detachably coupled to tractor 14. Each trailer 16 include one or more trailer axles.

Systems 12 are provided for assessing operating conditions for vehicle 10. The operating conditions may include conditions relating to the operation of individual components or systems within vehicle 10 or to the operation of vehicle 10 as a whole. The operating conditions may further include conditions relating to the environment in which vehicle 10 is operating including weather conditions such as temperature, humidity or atmospheric pressure, conditions associated with the surface on which vehicle 10 is travelling such as the type of surface, grade or direction and conditions associated with other objects in the operating environment including other vehicles, pedestrians and road infrastructure such as the presence or absence of such objects and their locations relative to vehicle 10. In the illustrated embodiment, system 12A is provided to assess pressure in tires 18 mounted on a wheel 20 of vehicle 10, system 12B is provided to asses wear in a friction pad 22 of a disc brake 24 that engages a rotor 26 coupled to wheel 20 for braking rotation of wheel 20, system 12C is provided to assess the state (coupled or uncoupled) of a coupling 28 such as a fifth wheel connection or latch between tractor 14 and trailer 16 and system 12D is provided to asses the state (open or closed) of a door 30 on trailer 16. Other exemplary systems 12 (not shown) may include a system for assessing a temperature of disc brake 24, a system for assessing a temperature of a wheel end bearing for wheel 20, a system for assessing an amount or frequency of vibration in a wheel end bearing for wheel 20, a system for assessing a level of temperature of a lubricant for an axle supporting wheel 20, a system for assessing an amount of movement of a suspension component (resulting from suspension travel or suspension leveling), a system for measuring supply pressure for various pneumatic systems on vehicle 10, a system for measuring a load (cargo level) on trailer 16 and a system for measuring environmental conditions (e.g., temperature, humidity, etc.) for a cargo hold in trailer 16.

It should be understood that systems 12A, 12B, 12C, 12D are exemplary only and that similar systems 12 may be used to assess a wide variety of operating conditions for vehicle 10 as set forth above. Further, although each of systems 12A, 12B, 12C, 12D is described above as being provided for assessing a specific operating condition for vehicle 10, it should be understood that, in accordance with the present teachings discussed in greater detail below, each of systems 12A, 12 B, 12C, 12D is configured to assess additional operating conditions beyond the specific operating conditions identified above for each system 12A, 12B, 12C, 12D. Conventional sensor systems often integrate multiple sensors for sensing a variety of different operating conditions into a single sensor unit. Therefore, for example, two or more of systems 12A, 12B, 12C, 12D could be combined as a single system or sensor unit for assessing the specific operating conditions identified above for each system 12A, 12B, 12C, 12D. Further each of systems 12A, 12B, 12C, 12D may assess any number of additional operating conditions for vehicle 10 beyond the specific operating conditions identified above for each system 12A, 12B, 12C, 12D. Notably, information regarding the specific conditions identified above that are assessed by systems 12A, 12B, 12C, 12 is only required at certain times. For example, information regarding tire pressure assessed by system 12A may not be needed while vehicle 10 is not operating. Information regarding friction pad wear assessed by system 12B is only needed periodically because friction pad wear does not change significantly over short periods of time. Information regarding whether trailer 16 is coupled to tractor 14 assessed by system 12C is not needed when the tractor 14 is not towing a trailer 16 (i.e. when tractor 14 is operating in a "bobtail" configuration). Information regarding whether the door 30 on trailer 16 is open or closed may not be needed when the trailer 16 is not being towed by a tractor 14. Because information regarding these operating conditions is only needed at certain times, continuous assessment of these operating conditions by systems 12A, 12B, 12C, 12D will unnecessarily draw power from power sources associated with systems 12A, 12B, 12C, 12D-and in particular power sources providing power to sensors associated with systems 12A, 12B, 12C, 12D--without providing a corresponding benefit. Where the power in such power sources is finite or otherwise limited, continuous assessment of operating conditions by systems 12A, 12B, 12C, 12D that is only needed at certain times reduces the useful life of the power supply, components within systems 12A, 12B, 12C, 12D and/or the system 12A, 12B, 12C, 12D as a whole thereby increasing maintenance costs. In accordance with the present teachings, each system 12 (including systems 12A, 12B, 12C, 12D) is configured to assess multiple operating conditions for vehicle 10. Further, as described in greater detail below, each system 12 includes at least one sensor that assesses an operating condition indicative of the operating state of vehicle 10 and at least one sensor that assesses an operating condition of vehicle 10 that is only required in certain operating states of vehicle 10. The system 12 uses the information indicative of the operating state of vehicle 10 to control the sampling rate of the other sensor(s) whose information is required only in certain operating states and/or the transmission rate of the information from those sensors.

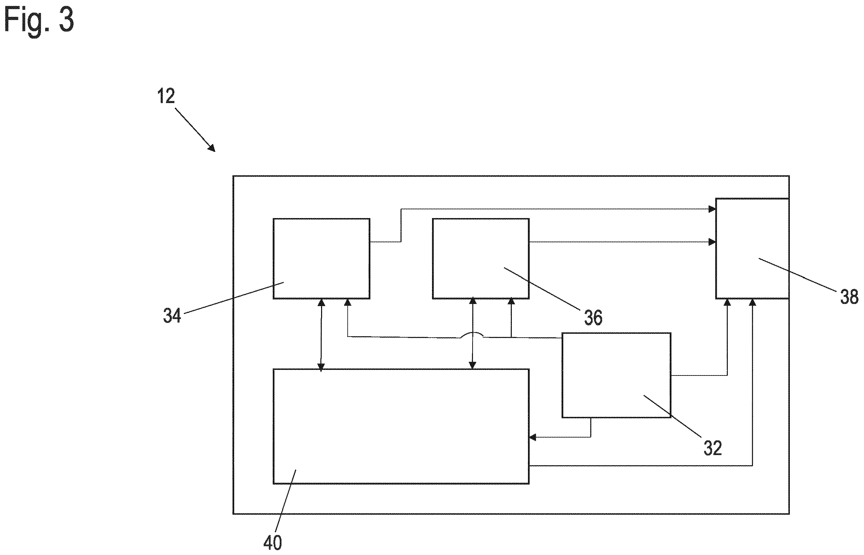

Referring now to Figure 3, a system 12, such as one of systems 12A, 12B, 12C, 12D, for assessing operating conditions in vehicle 10 in accordance with the present teachings will be described. System 12 includes a power source 32, sensors 34, 36, a transmitter 38, and a controller 40. System 12 is a "wireless" system in that system 12 is not coupled to any other systems on vehicle 10 through a vehicle communications bus (such as a controller area network (CAN) or local interconnect network (LIN) or power line communication network (PLC)) or any wires or other conductors. As a result, system 12 obtains power solely from power supplies within system 12 such as power source 32 and is unable to draw power from, for example, the primary vehicle battery in tractor 14. Further, system 12 communicates with other systems on vehicle 10 or external to vehicle 10 only through transmitter 38.

Power source 32 provides power to sensors 34, 36, transmitter 38 and controller 40 and to other components of system 12. Power source 32 may comprise a power source that cannot be recharged and has a finite supply of power such as a non-rechargeable battery. Alternatively, power source 32 may comprise a power source that can be recharged, but produces relatively limited power such as an energy harvesting or energy scavenging power source. Exemplary energy harvesting or energy scavenging power sources include piezoelectric devices that convert strain or vibration into electrical energy, pyroelectric devices that convert changes in temperature into electric energy, thermoelectric devices such as thermocouples that convert heat into electric energy and electrostatic or capacitive devices that convert mechanical vibration into electrical energy. Because power source 32 can supply only a finite or limited amount of power, energy conservation with system 12 is important to prolong the life of power source 32 and system 12 and insure proper operation of system 12. Although the illustrated embodiment includes a single power source 32, it should be understood that system 12 may include multiple power sources 32 including individual power sources 32 for selected components of system 12.

Sensors 34, 36 are provided to measure or sense values or states associated with various operating conditions for vehicle 10 and generate sensor signals indicative of those operating conditions. Sensors 34, 36 are coupled to, and receive power from, power source 32. Although the illustrated embodiment includes two sensors 34, 36, it should be understood that system 12 may include additional sensors.

Sensors 34, 36 may be used to assess a wide variety of operating conditions associated with vehicle 10. Sensors 34, 36 may, for example, comprise speed sensors configured to determine the rotational speed of a component of vehicle 10 such as wheel 20 or a power transmission shaft. Sensors 34, 36 may comprise pressure sensors configured to determine atmospheric pressure or the pressure in a component of vehicle 10 such as tire 18 (as in system 12A), a brake actuator chamber, a compressor, or a conduit of a fluid circuit that delivers fluid to, or exhausts fluid from, another component of vehicle 10. Sensors 34, 36 may comprise position sensors configured to determine a degree of rotation of a component of vehicle 10 such as a fiction pad wear adjuster component indicative of friction pad wear (as in system 12B) or a steering column component indicative of the steer angle for vehicle 10 or to determine the state of a component of vehicle 10 including whether a coupling 18 between tractor 14 and trailer 16 is latched (as in system 12C) or whether a door 30 on tractor 14 or trailer 16 is open (in system 12D). Sensors 34, 36 may comprise temperature sensors configured to determine ambient temperature in the area in which vehicle 10 is located or a localized temperature within vehicle 10. Sensors 34, 36 may comprise moisture sensors configured to determine humidity. Sensors 34, 36 may comprise altimeters configured to determine the altitude of vehicle 10 or the change in grade of the surface on which vehicle 10 is travelling. Sensors 34, 36 may comprise GPS sensors or yaw rate sensors configured to determine the direction of travel of vehicle 10. Sensors 34, 36 may comprise RADAR, LIDAR or similar sensors configured to determine the presence and location of other vehicles, pedestrians, and lane markers and other road infrastructure. Sensors 34, 36 may also comprise voltage or current sensors configured to measure the voltage or current level in component of vehicle 10 including power source 32. It should be understood that this listing of the types of sensors and the operating conditions measured or sensed by the sensors is not meant to be exhaustive and that other types of sensors could be employed within system 12 depending on the operating condition that is being assessed.

In accordance with the present teachings, at least one of sensors 34, 36 generates a sensor signal for an operating condition for vehicle 10 that is indicative of an operating state of vehicle 10. Information regarding the operating state is provided to controller 40. The operating state may relate to whether vehicle 10 is in motion with one state being that vehicle 10 is in motion and another state being that vehicle 10 is not in motion. A wide variety of sensors may assess operating conditions for vehicle 10 that indicate that the vehicle is in motion including, for example, wheel speed sensors indicating rotation of wheels 20, acceleration sensors indicating acceleration of vehicle 10, yaw rate sensors indicating a change in direction of vehicle 10, temperature sensors indicating an increase in temperature in the engine of vehicle 10 or another component of vehicle 10, vibration sensors indicting vibration of vehicle 10 or a component of vehicle 10, or pressure sensors indicating an increase in pressure in a compressor or another fluid system component on vehicle 10. Further, various sensors exist (including, e.g., the wheel speed sensor described above) that will generate a sensor signal that has a steady state when the vehicle is not in motion, but that varies when the vehicle is in motion. In the embodiment in which power source 32 is an energy harvesting device, voltage or current sensors configured to measure the energy level in power source 32 may also indicate that the vehicle is in motion because the voltage or current levels may increase with increases in vibration or temperature, for example. Alternatively, the operating state may, relate to whether vehicle 10 has been started with one state being that vehicle 10 has been started and another state being that vehicle 10 has not been started. Again, a wide variety of sensors may assess operating conditions for vehicle 10 that indicate starting or activation of vehicle 10 including the sensors described above indicating that the vehicle is motion. Other sensors indicative of the starting of the vehicle may include current sensors indicating the flow of current to an engine starter or to certain accessory systems on vehicle 10.

Transmitter 38 is provided to wirelessly transmit informational signals responsive to the sensor signals generated by sensors 34, 36 to other systems on vehicle 10 or remote from vehicle 10. The informational signals may include the same information as the sensor signals (with or without processing to, for example, amplify the signal or add identifiers or error correction codes). Alternatively, the informational signals may include information derived from the sensor signals through processing of the signals by controller 40. Transmitter 38 may comprise a short-range wireless communication transmitter configured to enable communication with other systems in vehicle 10 or in close proximity to vehicle 10 using various industry standard short-range wireless communication protocols such as Bluetooth, Wi-Fi (IEEE 802.11), or Zigbee or proprietary communication protocols. Alternatively, transmitter 38 may comprise a long-range wireless communications transmitter configured to enable satellite communications or to enable cellular communications using analog communications technologies such as AMPS or digital communications technologies such as CDMA (e.g., CDMA2000) or GSM/GPRS (in most conventional vehicles, however, any long-range communication from system 12 would be handled by a telematics unit on vehicle 10 following receipt by the telematics unit of short-range communications from a short-range wireless communications transmitter 38 in system 12). Transmitter 38 is coupled to, and receives power from, power source 32. Transmitter 38 is also coupled to, and receives control signals from, controller 40 including signals to begin and end transmissions and signals controlling the transmission are of transmitter 38.

Controller 40 is provided to control other components in system 12 including sensors 34, 36 and transmitter 38. Controller 40 may also process the sensor signals output by sensors 34, 36 to derive information from the sensors signals for transmission by transmitter 38. Controller 40 may comprise a programmable microprocessor or microcontroller or may comprise an application specific integrated circuit (ASIC). In certain embodiments, controller 40 may include a memory, a central processing unit (CPU), and an input/output (I/O) interface including a plurality of input/output pins or terminals through which controller 40 may receive a plurality of input signals and transmit a plurality of output signals. The input signals may include the sensor signals generated by sensors 34, 36. The output signals may include signals used for controlling sensor 34, 36 and transmitter 38 as well as signals that provide processed data obtained from the sensor signals generated by sensors 34, 36.

Controller 40 may be configured with appropriate programming instructions (i.e., software or a computer program) to implement a method for assessing operating conditions for vehicle 10. The method may begin with the step of receiving a sensor signal from one of sensors 34, 36 that is indicative of an operating state of vehicle 10. As set forth above, in accordance with the present teachings, at least one of sensors 34, 36 is configured to generate a sensor signal indicative of an operating condition for vehicle 10 that is also indicative of an operating state of vehicle 10. This information will then be used to control the sampling rate of other sensors 34, 36 and/or the transmission rate of transmitter 38 to limit activity of the other sensors 34, 36 and/or transmitter 38 and preserve power in power source 32 when information from those sensors 34, 36 is not required. For purposes of further discussion, sensor 34 will be designated as generating a sensor signal for an operating condition that is indicative of the operating state of vehicle 10.

The method may continue with the step of determining, responsive to the sensor signal from sensor 34, whether the operating state of the vehicle meets a predetermined condition. For example, the predetermined condition may be that the vehicle 10 is in motion and controller 40 may determine whether vehicle 10 is in motion responsive to the sensor signal. As noted above, a wide variety of sensors may indicate that the vehicle is in motion including, for example, wheel speed sensors indicating rotation of wheels 20, acceleration sensor, or yaw rate sensors indicating acceleration of a change in direction of vehicle 10, temperature sensors indicating an increase in temperature in the engine of vehicle 10 or another component or pressure sensors indicating an increase in pressure in a compressor or another fluid system component on vehicle 10. Further, a variety of sensors exist (including, e.g., the wheel speed sensor described above) that will generate a sensor signal that has a steady state when the vehicle is not in motion, but that varies when the vehicle is in motion. In the embodiment in which power source 32 is an energy harvesting device, voltage or current sensors configured to measure the energy level in power source 32 may also indicate that the vehicle is in motion because the voltage or current levels may increase with increases in vibration or temperature, for example. In another embodiment, the predetermined condition may be that vehicle 10 has started or been activated and controller 40 may determine whether vehicle 10 has started in response to the sensor signal. Again, a wide variety of sensors may generate signals indicative of the starting of vehicle 10 including the sensors described above indicating that the vehicle is motion. Other sensors indicative of the starting of the vehicle, may include current sensors indicating the flow of current to an engine starter or to certain accessory systems on vehicle 10.

The method may continue with the steps of providing different control signals to other sensors in system 12, such as sensor 36, or to transmitter 38 depending on whether the operating state of vehicle 10 meets the predetermined condition. In one embodiment, controller 40 may be configured to provide one control signal to the sensor 36 that causes sensor 36 to sample an operating condition at one sampling rate if the operating state of the vehicle meets the predetermined condition and a different control signal to the sensor 36 that causes sensor 36 to sample the operating condition at a different sampling rate if the operating state of the vehicle does not meet the predetermined condition. In this manner, controller 40 can adjust the sampling rate (to a lower sampling rate) for the senor 36 in operating states where information from the sensor 36 is not needed or needed less frequently in order to conserve power in power source 32. In another embodiment, controller 40 may be configured to provide one control signal to transmitter 38 that causes transmitter 38 to transmit the informational signal at one transmission rate if the operating state of the vehicle meets the predetermined condition and to provide a different control signal to the transmitter 38 that causes the transmitter 38 to transmit the informational signal at a different transmission rate if the operating state of the vehicle does not meet the predetermined condition. In this manner, controller 40 can adjust the transmission rate for transmitter 38 in operating states where information from the sensor 36 is not needed or needed less frequently in order to conserve power in power source 32. In yet another embodiment, controller 40 may be configured to provide control signals to both sensor 36 and transmitter 38 to alter the sampling rate of sensor 36 and the transmission rate of transmitter 38.

A system 12 for assessing operating conditions in a vehicle 10 in accordance with the present teachings represents an improvement as compared to conventional systems. In particular, the system 12 uses a sensor signal generated by one sensor 34 and indicative of an operating state of the vehicle 10 to determine the sampling rate of another sensor 36 and/or the transmission rate of a transmitter 38 that transmits information from that sensor 36. In this manner, the sampling rate and/or transmission rate can be modified depending on the operating state of the vehicle 10 so that the sensor 36 and/or transmitter 38 does not operate, or operates less frequently, when the operating state of the vehicle 10 does not require the same amount of information regarding the operating condition sensed by the sensor 36. As a result, the life of the power source 32 supplying power to the sensor 36 and/or transmitter 38-as well as the sensor unit as a whole- is increased and maintenance costs are reduced.

While the invention has been shown and described with reference to one or more particular embodiments thereof, it will be understood by those of skill in the art that various changes and modifications can be made without departing from the spirit and scope of the invention.

## Claims

1. A system for assessing operating conditions for a vehicle, comprising:
a power source;
a first sensor coupled to the power source and configured to generate a first sensor signal indicative of a first operating condition of the vehicle;
a second sensor coupled to the power source and configured to generate a second sensor signal indicative of a second operating condition of the vehicle,
the second operating condition indicative of an operating state of the vehicle;
a transmitter coupled to the power source and configured to transmit an informational signal responsive to the first sensor signal; and,
a controller configured to
receive the second sensor signal;
determine, responsive to the second sensor signal, whether the operating state of the vehicle meets a predetermined condition;
provide a first control signal to the first sensor to cause the first sensor to sample the first operating condition at a first sampling rate if the operating state of the vehicle meets the predetermined condition; and,
provide a second control signal to the first sensor to cause the first sensor to sample the first operating condition at a second sampling rate, different from the first sampling rate, if the operating state of the vehicle does not meet the predetermined condition.

2. A system for assessing operating conditions for a vehicle, comprising:
a power source;
a first sensor coupled to the power source and configured to generate a first sensor signal indicative of a first operating condition of the vehicle;
a second sensor coupled to the power source and configured to generate a second sensor signal indicative of a second operating condition of the vehicle,
the second operating condition indicative of an operating state of the vehicle;
a transmitter coupled to the power source and configured to transmit an informational signal responsive to the first sensor signal; and,
a controller configured to
receive the second sensor signal;
determine, responsive to the second sensor signal, whether the operating state of the vehicle meets a predetermined condition;
provide a first control signal to the transmitter to cause the transmitter to transmit the informational signal at a first transmission rate if the operating state of the vehicle meets the predetermined condition; and,
provide a second control signal to the transmitter to cause the transmitter to transmit the informational signal at a second transmission rate, different from the first transmission rate, if the operating state of the vehicle does not meet the predetermined condition.

3. The system of claim 1 or claim 2 wherein the power source cannot be recharged.

4. The system of claim 1 or claim 2 wherein the power source can be recharged.

5. The system of claim 4 wherein the second operating condition comprises an energy level of the power source.

6. The system of claim 1 or claim 2 wherein the first operating condition comprises an amount of wear on a brake friction pad.

7. The system of claim 1 or claim 2 wherein the first operating condition comprises a pressure in a tire of the vehicle.

8. The system of claim 1 or claim 2 wherein the second operating condition comprises one of a temperature, a pressure in a fluid system component of the vehicle, a vibration of the vehicle and an acceleration of the vehicle.

9. The system of claim 1 or claim 2 wherein the operating state of the vehicle comprises one of a first state in which the vehicle has been started and a second state in which the vehicle has not been started.

10. The system of claim 1 or claim 2 wherein the operating state of the vehicle comprises one of a first state in which the vehicle is in motion and a second state in which the vehicle is not in motion.

11. The system of claim 1 wherein the second sampling rate is lower than the first sampling rate.

12. The system of claim 2 wherein the second transmission rate is lower than the first transmission rate.

13. The system of claim 1 wherein the controller is further configured to:
provide a third control signal to the transmitter to cause the transmitter to transmit the informational signal at a first transmission rate if the operating state of the vehicle meets the predetermined condition; and,
provide a fourth control signal to the transmitter to cause the transmitter to transmit the informational signal at a second transmission rate, different from the first transmission rate, if the operating state of the vehicle does not meet the predetermined condition.
